# EUROPÄISCHE PATENTSCHRIFT

(11) **EP 0 508 145 B1**
(45) Veröffentlichungstag und Bekanntmachung des Hinweises auf die Patenterteilung: **07.12.1994**
(21) Anmeldenummer: 92104258.6
(22) Anmeldetag: 12.03.1992
(51) Int. Cl.: F01N 7/14, F01N 7/08, F16L 59/18

(54) **Luftspaltisoliertes Vorrohr**
Exhaust pipe with air gap insulation
Conduit d'échappement isolé par une couche d'air

(30) Priorität: 12.03.1991 DE 9102926 U
(43) Veröffentlichungstag der Anmeldung: 14.10.1992
(73) Patentinhaber: LEISTRITZ AG & CO. Abgastechnik, D-90765 Fürth (DE)
(72) Erfinder: Stoepler, Walter, Dr., D-91074 Herzogenaurach (DE); Sagitzki, Manfred, D-90409 Nürnberg (DE); Zapf, Michael, D-90443 Nürnberg (DE)
(74) Vertreter: Tergau, Enno, Dipl.-Ing.

(56) Entgegenhaltungen:
- EP-A- 503 580
- DE-A- 2 015 843
- DE-A- 2 452 556
- DE-U- 8 912 161
- FR-A- 1 394 743
- GB-A- 2 075 658
- US-A- 4 185 463
- US-A- 4 250 927

## Beschreibung

Die Erfindung betrifft ein luftspaltisoliertes Vorrohr als Abgasstrang zwischen Motor und Katalysator eines Automobils mit den im Oberbegriff des Anspruches 1 aufgeführten Merkmalen.

Bei einem bekannten Vorrohr dieser Art ist das Innenrohr aus Gründen der Massereduzierung vergleichsweise dünnwandig ausgeführt, um dem mit ihm in unmittelbarem Kontakt stehenden Abgas möglichst wenig Wärme zu entziehen. Es besteht aus hochwertigem Werkstoff, insbesondere aus Stahl. Dem das Innenrohr unter Belassung des wärmeisolierenden Luft-Ringspaltes umgebenden Mantelrohr obliegt neben der Wärmeisolationsfunktion die Trägerfunktion für das Innenrohr. Am Mantelrohr ist beispielsweise der Verbindungsflansch zum Abgasstutzen des Motors befestigt, insbesondere angeschweißt. Desgleichen bildet das Mantelrohr das Einsteckende des Vorrohres in das Katalysatorgehäuse. Das Mantelrohr besteht aus einfachem, kostengünstigem Werkstoff, insbesondere Stahl, und ist aus Stabilitätsgründen vergleichsweise dickwandig ausgeführt.

Bei dem bekannten Vorrohr ist das Innenrohr am motorseitigen Ende mit dem Mantelrohr fest verbunden, während es am anderen, katalysatorseitigen Ende mit einem Schiebesitz im Mantelrohr geführt ist. Dazu weist das Mantelrohr dort eine sich über einen gewissen Längenbereich erstreckende Durchmessereinschnürung auf. Die durch diesen Schiebesitz ermöglichte Relativbeweglichkeit zwischen Innenrohr und Mantelrohr in Axialrichtung des Vorrohres ist erforderlich, um beim Motorbetrieb einen Ausgleich für die unterschiedlichen Wärmeausdehnungen von Innenrohr und Mantelrohr zu ermöglichen. Diese unterschiedlichen Wärmeausdehnungen sind unvermeidlich wegen des unterschiedlichen Temperaturniveaus von Innenrohr und Mantelrohr.

Der vom Vorrohr gebildete Abgasstrang zwischen Motor und Katalysator verläuft nicht geradlinig, sondern auf den Gegebenheiten der Automobilkarosserie angepaßten, unregelmäßig gewundenen Wegen. Dadurch treten zwischen Innen- und Mantelrohr im Bereich des Schiebesitzes neben Axialkräften starke, rechnerisch schwer vorhersehbare Querkräfte auf, die ein von unangenehmer Geräuschentwicklung begleitetes Festsetzen oder Klemmen des Schiebesitzes bewirken können.

Bei einem aus DE-U-89 12 161, die den nächstkommenden Stand der Technik bildet, bekannten doppelwandigen, als Abgasleitung eines mit einem Abgaskatalysator ausgerüsteten Verbrennungsmotors verwendeten Rohr ist ebenfalls ein Schiebesitz zur Führung des Innenrohrs im Mantelrohr vorgesehen. An einem Ende ist das Innenrohr im Mantelrohr einliegend an diesem fixiert. Am anderen Ende ist das Innenrohr im Mantelrohr unter Zwischenlage eines Lagerrings längsverschiebbar geführt. Dort besitzt das Innenrohr einen zylindrischen Rohrabschnitt, der als Gleitfläche für den Lagerring zum Längenausgleich der Wärmedehnung des Innenrohres dient. In diesem Längenbereich besitzt das Außenrohr einen konischen Rohrabschnitt, der sich in Ausdehnungsrichtung des Innenrohres erweitert. Der Lagerring besteht dabei aus verdichtetem Drahtgestrick.

Aus GB-A-20 75 658 ist ein Abstandshalter für einen aus einem Außenrohr und einem konzentrischen Innenrohr bestehender Wärmeübertrager zwischen Flüssigkeiten oder Gasen mit einer rohrförmigen Hülse bekannt, die am Innenrohr gehalten ist und sich über mindestens drei im wesentlichen radiale, gleichmäßig um die Mittelachse verteilte Stützelemente am Außenrohr abstützt. Die Hülse dieses aus Kunststoff bestehenden Abstandshalters ist in Längsrichtung derart geschlitzt, daß der Abstandshalter auf das Innenrohr aufklipsbar ist. Dabei kann die rohrförmige Hülse des Abstandshalters auch aus zwei axial beabstandeten Teilen bestehen, die über gewölbte Stützelemente miteinander verbunden sind.

Der Erfindung liegt die Aufgabe zugrunde, das Innenrohr so innerhalb des Mantelrohres anzuordnen und zu führen, daß es sich aufgrund seiner Wärmeausdehnungen ungehindert relativ zum Mantelrohr bewegen kann. Diese Aufgabe wird entsprechend dem Kennzeichen des Anspruches 1 durch im Schiebesitzbereich angeordnete Distanzelemente gelöst, die neben der Längsverschiebbarkeit eine zusätzliche Winkelbeweglichkeit zwischen Innen- und Mantelrohr ermöglichen. Diese Distanzelemente verleihen somit dem Schiebesitz eine mit der Funktion eines Pendelkugellagers vergleichbare Wirksamkeit, indem sich nämlich das Innenrohr gegenüber dem Mantelrohr nicht nur axial verschieben, sondern auch um den Lagermittelpunkt schwenkend einstellen kann. Dadurch wird der Schiebesitz auch unempfindlich gegen Fluchtfehler zwischen Innen- und Mantelrohr sowie gegen Biegebewegungen des Innenrohrs relativ zum Mantelrohr.

Die Federringhülse liegt also mit ihren beiden Ringenden jeweils am einen und mit ihren dazwischenliegenden Brückenstegen am anderen Rohr an. Diese Anlage in drei Ringbereichen bedeutet eine stabilisierte Abstützung der Federringhülse, die in jeweils einem ihrer Abstützbereiche mit der Abstütz-Gegenfläche, d.h. mit dem Umfang des Innenrohres oder dem Innenumfang des Mantelrohres zweckmäßig verschweißt ist. Diese Schweißung kann unter Zwischenlage eines Ringkörpers erfolgen. Vorteilhaft wird aber auf einen solchen Ringkörper verzichtet. Die Verschweißung ist dann unmittelbar.

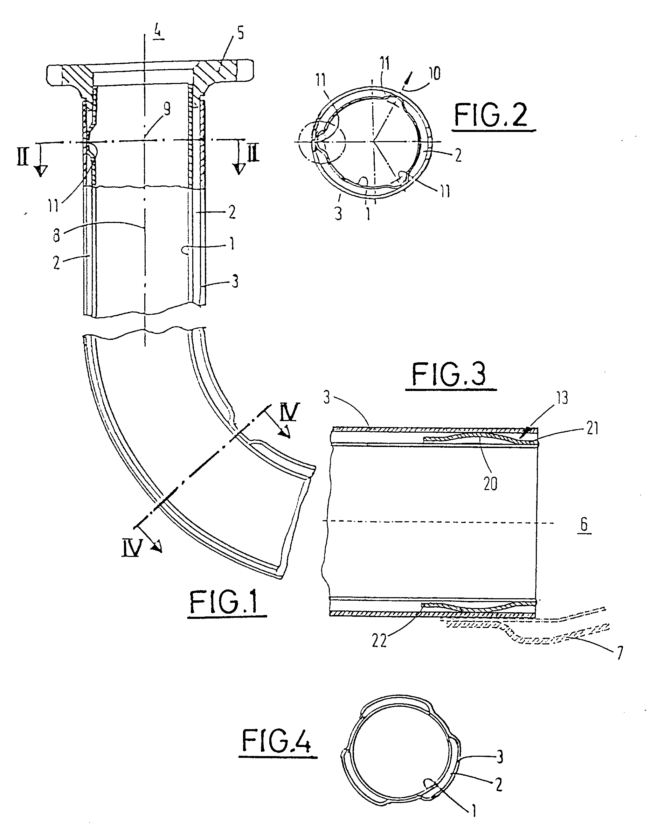

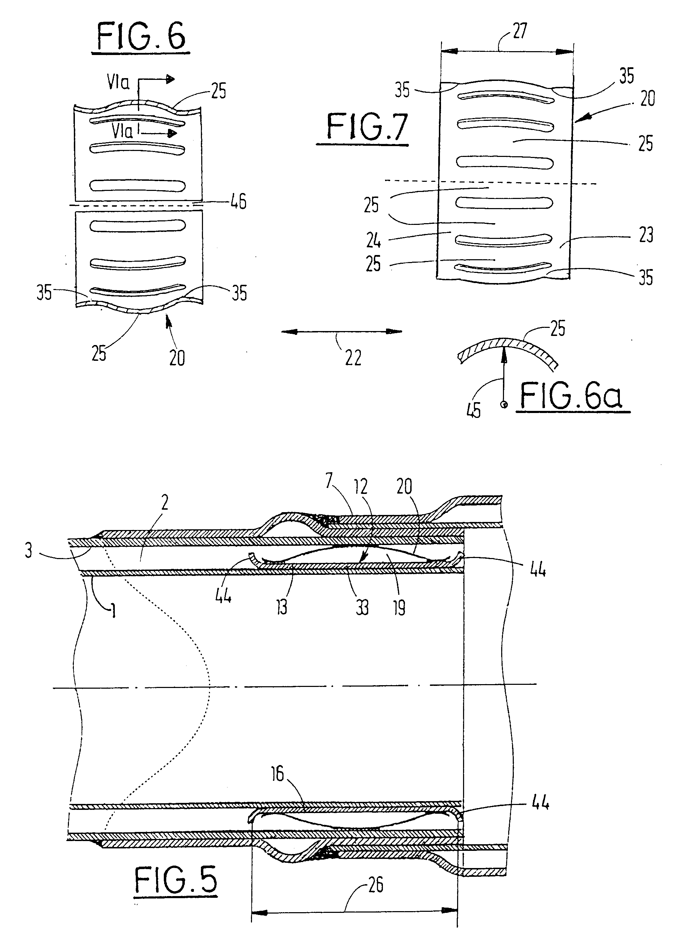

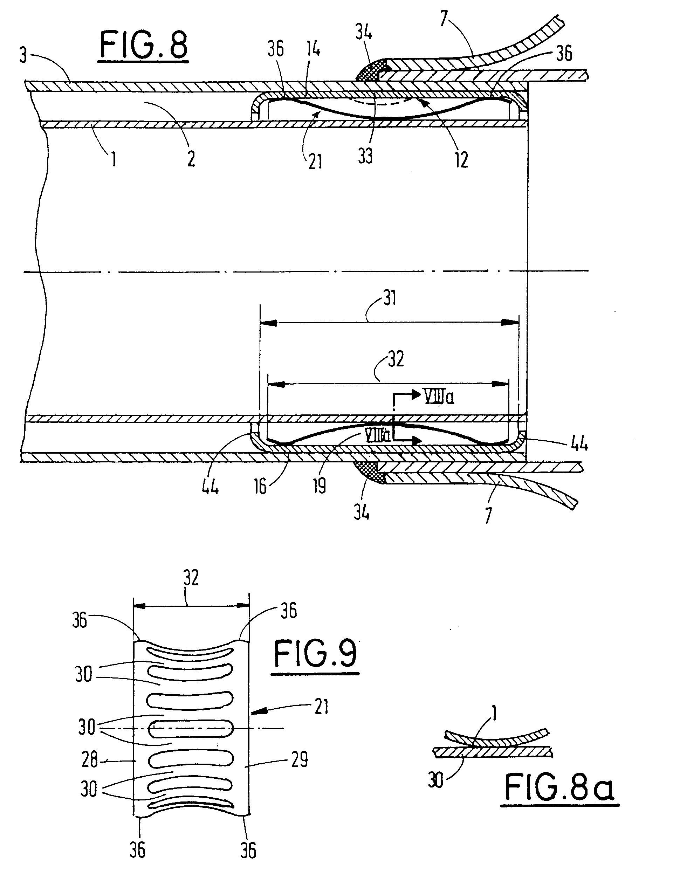

Der Gegenstand der Erfindung wird anhand von in den Figuren dargestellten Ausführungsbeispielen näher erläutert. Es zeigen:
- Fig. 1: einen schematischen Längsschnitt durch die wesentlichen Teile des Vorrohres außerhalb des erfindungsgemäßen Schiebesitzes,
- Fig. 2: einen Schnitt entsprechend der Linie II-II in Fig. 1 durch das Vorrohr im motorseitigen Schiebesitzbereich,
- Fig. 3: einen vergrößerten Längsschnitt durch den katalysatorseitigen Schiebesitz,
- Fig. 4: einen Querschnitt entsprechend der Linie IV-IV in Fig. 1 durch das Vorrohr in einem Mittelbereich zwischen den beiden Enden, wo das Innenrohr mit dem Mantelrohr fest verbunden, z.B. verschweißt ist,
- Fig. 5: einen Längsschnitt durch das katalysatorseitige Ende des Vorrohres mit einer modifizierten Festlegung der Federringhülse am Innenrohr,
- Fig. 6: eine schematisierte Schnittdarstellung analog Fig. 5 lediglich der Federringhülse,
- Fig. 6a: einen Querschnitt entsprechend der Schnittlinie VIa-VIa in Fig. 6,
- Fig. 7: eine Gesamt-Seitenansicht der Federringhülse,
- Fig. 8: eine funktionsmäßig der Ausführungsform von Fig. 5 ähnliche Ausführungsform, bei der aber die Federringhülse mit ihren Brückenstegen auf den Außenmantel des Innenrohrs wirkt,
- Fig. 8a: einen Querschnitt entsprechend der Schnittlinie VIIIa-VIIIa in Fig. 8 durch einen Brückensteg der Federringhülse,
- Fig. 9: eine Gesamtdarstellung der bei der Ausführungsform nach Fig. 8 verwendeten Federringhülse,
- Fig. 10: einen Teilausschnitt analog Fig. 5
- Fig. 11: einen Teilausschnitt analog Fig. 8
Das Vorrohr gemäß Fig. 1 besteht im wesentlichen aus einem dünnwandigen Innenrohr 1 und einem das Innenrohr 1 tragenden und unter Belassung eines Luft-Ringspaltes 2 umgebenden, vergleichsweise dickwandigen Mantelrohr 3. Das Innenrohr 1 besteht aus einem hochwertigen, das Mantelrohr 3 aus einem weniger hochwertigen und damit kostengünstigen Stahl. Im Bereich des Motorendes 4 ist das Mantelrohr 3 mit einem Befestigungsflansch 5 fest verbunden. Das Ende 4 des Innenrohres 1 ist in der Flanschausnehmung geführt. An seinem katalysatorseitigen Ende 6 ist das Mantelrohr 3 in das schematisch angedeutete Katalysatorgehäuse 7 eingeführt und mit diesem umfänglich verschweißt (Fig. 5,8).

Im Bereich beider Enden 4,6 des Vorrohres ist das Innenrohr 1 mit Schiebesitz am Mantelrohr 3 geführt. Eine konstruktive Ausgestaltung der Schiebesitze ist außer in der Längsschnittdarstellung von Fig. 1 besonders deutlich in den Schnittdarstellungen der Fig. 2,3 erkennbar. Wesentlicher Bestandteil dieses Schiebesitzes ist das Vorhandensein von über den Verlauf des Ringspaltes 2 verteilt angeordneten Distanzelementen zwischen Innenrohr 1 und Mantelrohr 3. Diese Distanzelemente schaffen im Schiebesitzbereich eine zusätzliche Winkelbeweglichkeit zwischen Innenrohr 1 und Mantelrohr 3 um einen im Bereich etwa der Rohrachse 8 gedachten Schiebesitz-Mittelpunkt 9.

Gemäß Fig. 1 und 2 sind gleichmäßig über den Umfang verteilt in das Innenrohr 1 in Radialrichtung 10 auf das Mantelrohr 3 vorstehende, sickenartige Ausbeulungen 11 eingeformt. Im Falle des dargestellten Ausführungsbeispieles bilden die Ausbeulungen 11 einen in Rohrlängsrichtung 12 wirksamen Linienkontakt zwischen Innenrohr 1 und Mantelrohr 3. Die insgesamt drei gleichmäßig über den Umfang des Innenrohres 1 verteilten Ausbeulungen 11 können indessen auch so ausgestaltet sein, daß sie lediglich einen Punktkontakt zwischen Innenrohr 1 und Mantelrohr 3 bilden.

Erfindungsgemäße Ausgestaltungen der Distanzelemente sind Gegenstand insbesondere der Fig. 5 bis 11. Die Distanzelemente können dabei an der Konkavseite 12 eines die Querschnittsform etwa einer flachen Rinne aufweisenden Ringkörpers 13-15 anliegen. Mit 13 (Fig. 5) ist ein Innenringkörper bezeichnet, der auf den Außenumfang des Innenrohrs 1 geschweißt ist. Mit 14 ist ein Außenringkörper bezeichnet, der mit der Innenoberfläche des Mantelrohrs 3 verschweißt ist (Fig. 8).

Die Ringkörper 13-15 sind mit dem ihren Konkavseiten 12 abgewandten Bodenmantel 16 an einer den Luftringspalt 2 begrenzenden Rohrwand befestigt. Es ist dies bei dem Innenringkörper 13 die Außenwand des Innenrohres 1.

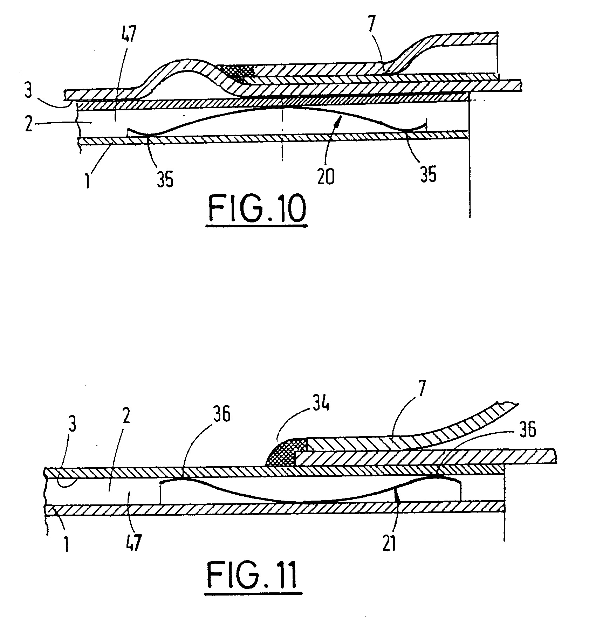

Die Ringkörper 13-15 bestehen aus metallischem Werkstoff, insbesondere aus demselben Werkstoff wie das sie tragende Innenrohr 1 oder Mantelrohr 3. Sie weisen die Form eines Zylinders mit an beiden Zylinderenden radial nach innen oder außen abgebogenen Anlageflanschen 44 auf. Die Ringkörper 13-15 sind quer zu ihrer Umfangsrichtung 17 geschlitzt. Ein Ringschlitz 18 ist anhand des Ringkörpers 15 in Fig. 11 dargestellt.

Die Distanzelemente sind durch dem Rinnenboden 12 abgewandte Umfangsbereiche einer in der Ringrinne 19 einliegenden Federringhülse 20,21 gebildet (Fig. 5 bis 7; 8 und 9).

Bei der Ausführungsform gemäß Fig. 5 bis 7 ist der Innenringkörper 13 mit seinem Bodenmantel 16 am Außenmantel des Innenrohres 1 angeschweißt. Die in seiner Ringrinne 19 einliegende Federringhülse 20 ist eine aus Federstahl bestehende, im wesentlichen zylindrische Manschette mit mehreren über den Manschettenumfang verteilt angeordneten, sich in Axialrichtung 22 zwischen zwei Ringenden 23,24 erstreckenden, radial nach außen ausgewölbten, nach Art von Federlamellen wirksamen Brückenstegen 25, die an der Innenwand des Mantelrohres 3 anliegen, während er mit seinen Ringenden 23,24 auf dem Innenringkörper 13 bzw. am Innenrohr 1 abgestützt ist. Dabei weist der Querschnitt eines Brückensteges 25 die Form etwa eines Kreissegments mit einem Biegeradius 45 auf, der deutlich kleiner ist als der halbe Innendurchmesser des Mantelrohres 3, wobei die Konvexseite des Kreissegments der Innenseite des Mantelrohres 3 zugewandt ist. Dadurch wird das Vorliegen einer einem idealen Punktkontakt am Mantelrohr 3 nahekommenden Konfiguration der Federringhülse 20 am Mantelrohr 3 hergestellt.

Die außerhalb der Brückenstege 25 liegenden Ringenden 23,24 der Federringhülse 20 können ungeschlitzt umfänglich in sich geschlossen sein. Eine andere Ausführungsform sieht vor, daß die Federringhülse 20 durch einen Schlitz 46 geschlitzt ist. Dadurch kann sich die Federringhülse 20 unter dem Einfluß der Erhitzung des Innenrohres 1 umfangsmäßig ungehindert dehnen. Genauso kann die nachstehend beschriebene Federringhülse 21 nach Art des Schlitzes 46 quer zu ihrer Umfangsrichtung geschlitzt sein, auch wenn dies in Fig. 9 im einzelnen nicht dargestellt ist.

Die lichte Rinnenbreite 26 (Fig. 5) zwischen den Anlageflanschen 44 des Ringkörpers 13 ist größer als die Breite 27 des Federringes 20.

Bei der Ausführungsform gemäß Fig. 8 ist der Außenringkörper 14 mit seinem Bodenmantel 16 an der Innenseite des Mantelrohres 3 befestigt. Die Federringhülse 21 ist wie die Federringhülse 20 eine aus Federstahl bestehende Manschette mit mehreren über den Manschettenumfang verteilt angeordneten, sich in Axialrichtung 22 zwischen den beiden Ringenden 28,29 erstreckenden, radial nach innen ausgewölbten Brückenstegen 30, die am Innenrohr 1 anliegen, während er mit seinen Ringenden 28,29 auf dem Außenringkörper 14 bzw. am Mantelrohr 1 abgestützt ist. Die Gestalt der Federringhülse 21 ist somit analog der der Federringhülse 20, nur wirken ihre Brückenstege 30 nach innen auf den Umfang des Innenrohres 1, während seine Ringenden 28,29 radial nach außen gegen die Konkavseite 12 des Außenringkörpers 14 bzw. gegen das Mantelrohr 3 wirksam sind.

Die Ausführungsform der Federringhülse 21 gemäß Fig. 8 bis 9 hat den Vorteil, daß ohne weitere Vorkehrungen von vornherein die Brückenstege 30 zwischen den beiden Ringenden 28,29 die Querschnittsform etwa eines Rechteckes einnehmen, welches mit seiner Langseite etwa tangential am Außenumfang des Innenrohres 1 anliegt (Fig. 8a). Hierbei wird davon ausgegangen, daß die Federringhülse 21 wie die Federringhülse 20 aus einem durch Stanzung und Biegung mit den Brückenstegen 25 bzw. 30 versehenen und durch Verschweißung seiner Schmalenden zu einem umfänglich in sich geschlossenen Ring geformten Blechstreifen aus Federblech hergestellt sind, wobei sich für die Brückenstege 30 selbsttätig die aus Fig. 8a ersichtliche, etwa rechteckige Querschnittsform ergibt, die eine mittig-tangentiale Anlage am Außenumfang des Innenrohres 1 ermöglicht. Demgegenüber sind bei dem Federring 20 (Fig. 6,7) zusätzliche Vorkehrungen erforderlich, um den Brückenstegen 25 die aus Fig. 6a ersichtliche, gewölbte Querschnittsform zu verleihen, die den für beide Federringformen 20,21 idealen, annähernden Punktkontakt im Bereich der Brückenstege 25 bzw. 30 am Gegenrohrmantel sicherstellt.

Auch die außerhalb der Brückenstege 30 liegenden Ringenden 28,29 der Federringhülse 21 können ungeschlitzt umfänglich in sich geschlossen sein. Auch beim Außenringkörper 14 ist die lichte Rinnenbreite 31 größer als die Breite 32 der Federringhülse 21.

Die Anlageoberflächen 35 der Ringenden 23,24 der Federringhülse 20 bzw. die Anlageoberflächen 36 der Ringenden 28,29 der Federringhülse 21 weisen eine in Richtung auf die anliegende Rohroberfläche konvex ausgewölbte Querschnittsform auf (Fig. 5 bis 7; 8). Diese Formgestaltung hat auch die Aufgabe, eine möglichst ideale, geringflächige Kontaktsituation zum Ringkörper herzustellen, nämlich im wesentlichen wenigstens einen Linienkontakt.

Die Ausführungsform gemäß Fig. 8 bis 9 mit auf das Innenrohr 1 wirkenden Brückenstegen 30 der Federringhülse 21 hat den weiteren Vorteil, daß das aus dem wertvolleren Werkstoff bestehende Innenrohr 1 eine gegenüber dem Mantelrohr 3 katalysatorseitig kürzere Länge aufweisen kann.

Die Fig. 10 und 11 zeigen Ausführungsformen, bei denen die Federringhülsen 20,21 mit dem Innenrohr 1 oder dem Mantelrohr 3 unmittelbar verbunden sind.

Die Federringhülsen 20 bzw. 21 sind mit einem ihrer beiden radialen Ringenden 28,29, nämlich im Bereich von deren Anlageoberflächen 35,36 oder mit ihren Brückenstegen 25,30 am anliegenden Innenrohr 1 (Fig. 11) oder am Mantelrohr (3) (Fig. 10) angeschweißt.

| Bezugszeichenliste | | | |
|---|---|---|---|
| 1 | Innenrohr | | |
| 2 | Luft-Ringspalt | 44 | Anlageflansch |
| 3 | Mantelrohr | 45 | Biegeradius |
| 4 | Motorende | 46 | Schlitz |
| 5 | Befestigungsflansch | | |
| 6 | katalysatorseitiges Ende | | |
| 7 | Katalysatorgehäuse | | |
| 8 | Rohrachse | | |
| 9 | Schiebesitz-Mittelpunkt | | |
| 10 | Radialrichtung | | |
| 11 | Ausbeulung | | |
| 12 | Konkavseite | | |
| 13 | Ringkörper | | |
| 14 | Ringkörper | | |
| 15 | Ringkörper | | |
| 16 | Bodenmantel | | |
| 17 | Umfangsrichtung | | |
| 18 | Ringschlitz | | |
| 19 | Ringrinne | | |
| 20 | Federringhülse | | |
| 21 | Federringhülse | | |
| 22 | Axialrichtung | | |
| 23 | Ringende | | |
| 24 | Ringende | | |
| 25 | Brückensteg | | |
| 26 | Rinnenbreite | | |
| 27 | Breite | | |
| 28 | Ringende | | |
| 29 | Ringende | | |
| 30 | Brückensteg | | |
| 31 | Rinnenbreite | | |
| 32 | Breite | | |
| 33 | Schweißnaht | | |
| 34 | Ring-Schweißnaht | | |
| 35 | Anlageoberfläche | | |
| 36 | Anlageoberfläche | | |

## Patentansprüche

1. Luftspaltisoliertes Vorrohr, das den Abgasstrang zwischen Motor und Katalysator eines Automobiles bildet
a) mit einem Innenrohr (1),
b) mit einem das Innenrohr (1) tragenden und unter Belassung eines Luft-Ringspaltes (2) umgebenden Mantelrohr (3) und
c) mit einem Schiebesitz zur Führung des Innenrohrs (1) am Mantelrohr (3),
dadurch gekennzeichnet,
d) daß der Schiebesitz durch
- über den Umfang des Luft-Ringspaltes (2) verteilt angeordnete,
- das Innenrohr (1) vom Mantelrohr (3) beabstandende und
- unter einem radialen Vorspanndruck, insbesondere einem radialen Federdruck stehende Distanzelemente gebildet ist,
e) daß die Distanzelemente durch eine im Luft-Ringspalt (2) einliegende Federringhülse (20,21) gebildet sind,
- die in einem zwischen ihren axialen Ringenden (23,24;28,29) liegenden Mittelbereich über ihren Umfang verteilt mit im wesentlichen in Axialrichtung verlaufenden Schlitzen versehen ist und
- deren zwischen benachbarten Schlitzen und zwischen den Ringenden (23,24;28,29) verlaufenden Brückenstege (25,30) radial nach innen oder außen ausgewölbt sind,
f) daß die Federringhülse (20,21) mit ihren axialen Ringenden (23,24;28,29) am einen und mit ihrem dazwischenliegenden, ausgewölbten Brückenstegen (25,30) am anderen Rohr (1 bzw. 3) unter Vorspanndruck anliegt und
g) daß die Federringhülse (20,21) an einem ihrer axialen Ringenden (23,24) oder an mindestens einem Brückensteg (25,30) mit dem anliegenden Rohr (1 bzw. 3) verbunden, insbesondere verschweißt ist.

2. Vorrohr nach Anspruch 1,
dadurch gekennzeichnet daß die Federringhülse (20,21) an einem ihrer axialen Ringenden (23,24) oder an mindestens einem Brückensteg (25,30) mit dem anliegenden Rohr (1 bzw. 3) durch eine Punktschweißverbindung verbunden ist.

3. Vorrohr nach Anspruch 1,
dadurch gekennzeichnet daß die Federringhülse (20,21) durch eine mindestens partiell ringartig verlaufende Schweißnaht an einem axialen Ringende (23,24) in dessen Anlagebereich an einem Rohr (1 bzw. 3) verbunden ist.

4. Vorrohr nach einem oder mehreren der vorhergehenden Ansprüche,
dadurch gekennzeichnet,
daß mindestens ein Brückensteg (25) die Querschnittsform etwa eines Kreissegments mit einem Biegeradius (45) aufweist, der kleiner ist als der halbe Innendurchmesser, nämlich der Biegeradius des Mantelrohres (3) und daß der Brückensteg (25) mit der Konvexseite seiner Querschnittsform am Mantelrohr (3) anliegt.

5. Vorrohr nach einem der Ansprüche 1 bis 4,
dadurch gekennzeichnet,
daß die außerhalb der Brückenstege (25) liegenden axialen Ringenden (23,24) der Federringhülse (20,21) ungeschlitzt umfänglich in sich geschlossen sind.

6. Vorrohr nach einem der Ansprüche 1 bis 4,
dadurch gekennzeichnet,
daß die Ringenden (23,24;28,29) der Federringhülse (20,21) in Fortsetzung eines Schlitzes (46) geschlitzt sind.

7. Vorrohr nach einem oder mehreren der vorhergehenden Ansprüche,
gekennzeichnet durch
eine in Richtung auf die anliegende Wand eines Rohres (1 bzw. 3) konvex ausgewölbte Querschnittsform der Anlageseiten (35,36) der Ringenden (23,24;28,29) der Federringhülse (20,21).

8. Vorrohr nach einem oder mehreren der vorhergehenden Ansprüche,
dadurch gekennzeichnet,
daß der Schiebesitz an seinem katalysatorseitigen Ende (6) angeordnet ist und daß dort das Katalysatorgehäuse (7) mit dem Außenumfang seines Mantelrohres (3) verschweißt ist.

9. Vorrohr nach einem oder mehreren der vorhergehenden Ansprüche,
dadurch gekennzeichnet,
daß das Innenrohr (1) zwischen den beiden Rohrenden (4,6) am Mantelrohr (3) befestigt ist und an beiden Enden mit einem Schiebesitz am Mantelrohr (3) geführt ist.

## Claims

1. A feeder pipe with air gap insulation which forms the exhaust pipe between the engine and catalyser of a motor vehicle,
a) with an inner pipe (1),
b) with an outer pipe (3) supporting the inner pipe (1) and surrounding it while leaving an annular air gap (2), and
c) with a sliding seating for guiding the inner pipe (1) on the outer pipe (3),
characterized in that
d) the sliding seating is formed by
- distance elements arranged to be distributed over the periphery of the annular air gap (2),
- which interspace the inner pipe (1) from the outer pipe (3) and
- are subjected to a radial prestressing pressure, in particular, a radial spring pressure,
e) that the distance elements are formed by a spring collar (20, 21) lying in the annular air gap (2),
- which is provided in a median zone lying between its axial ring ends (23, 24; 28 29) with slots that are distributed over its periphery and extend substantially in the axial direction, and
- whose bridging lands (25, 30) extending between neighbouring slots and between the ring ends (23, 24; 28, 29) are radially curved inwards or outwards,
f) that the spring collar (20, 21) bears with prestressing with its axial ring ends (23, 24; 28, 29) on one pipe and with its interposed curved bridging lands (25, 30) on the other pipe (1 and 3 respectively), and
g) that the spring collar (20, 21) is at one of its axial ring ends (23, 24), or at at least one bridging land (25, 30), connected, in particular welded, to the adjoining pipe (1 or 3 respectively).

2. A feeder pipe according to claim 1,
characterized in that
the spring collar (20, 21) is at one of its axial ring ends (23, 24), or at least one bridging land (25, 30), joined to the adjoining pipe (1 or 3 respectively) by means of a spot-welded joint.

3. A feeder pipe according to claim 1,
characterized in that
the spring collar (20, 21) is at one axial ring end (23, 24) joined in its bearing zone to one pipe (1 or 3 respectively) by at least one weld seam extending at least partly in an annular configuration.

4. A feeder pipe according to one or more of the preceding claims,
characterized in that
at least one bridging land (25) has approximately the cross-sectional shape of a circular segment with a bending radius (45) which is smaller than half the internal diameter, that is to say, the bending radius of the outer pipe (3), and that the bridging land (25) bears on the outer pipe (3) with the convex side of its cross-sectional shape.

5. A feeder pipe according to one of claims 1 to 4,
characterized in that
the axial ring ends (23, 24) of the spring collar (20, 21) lying outside the bridging lands (25) are peripherally closed in themselves without any slots.

6. A feeder pipe according to one of claims 1 to 4,
characterized in that
the ring ends (23, 24; 28, 29) of the spring collar (20, 21) are slotted in the continuation of one slot (46).

7. A feeder pipe according to one or more of the preceding claims,
characterized by
a cross-sectional shape, curving in the direction towards the adjacent wall of one pipe (1 or 3 respectively) of the bearing sides (35, 36) of the ring ends (23, 24; 28, 29) of the spring collar (20, 21).

8. A feeder pipe according to one or more of the preceding claims,
characterized in that
the sliding seating is arranged at its end (6) on the catalyser side and that the catalyser housing (7) is there welded to the outer circumference of its outer pipe (3).

9. A feeder pipe according to one or more of the preceding claims,
characterized in that
the inner pipe (1) is secured between the two pipe ends (4, 6) on the outer pipe (3) and is carried at both ends on the outer pipe (3) by a sliding seating.

## Revendications

1. Conduit d'échappement isolé par une couche d'air et formant le conduit des gaz d'échappement entre le moteur et le catalyseur d'une automobile
(a) comportant un tube intérieur (1),
(b) comportant un tube-enveloppe (3) qui porte le tube intérieur (1) et l'entoure en laissant une couche d'air annulaire (2) et
(c) comportant une assise de coulissement pour guider le tube intérieur (1) contre le tube-enveloppe (3),
caractérisé par le fait
(d) que l'assise de coulissement est formée par des éléments écarteurs
- disposés répartis sur la périphérie de la couche d'air annulaire (2),
- écartant le tube intérieur (1) du tube-enveloppe (3) et
- tenus sous une pression de précontrainte radiale, en particulier une pression élastique radiale,
(e) que les éléments écarteurs sont formés par un manchon annulaire élastique (20̸, 21) qui est introduit dans la couche d'air annulaire (2),
- qui, dans une zone médiane située entre ses extrémités annulaires axiales (23, 24; 28, 29), présente, réparties sur sa périphérie, des fentes orientées sensiblement selon la direction axiale et
- dont les barrettes de pontage (25, 30̸) entre les fentes voisines et entre les extrémités annulaires (23, 24; 28, 29) sont bombées radialement vers l'intérieur ou vers l'extérieur,
(f) que le manchon annulaire élastique (20̸, 21) s'appuie, sous pression de précontrainte, par ses extrémités annulaires axiales (23, 24; 28, 29), contre un tube et, par ses barrettes de pontage (25, 30̸) situées entre ses extrémités et bombées, contre l'autre tube (1 ou 3) et
(g) que, par l'une de ses extrémités annulaires axiales (23, 24) ou par au moins une barrette de pontage (25, 30̸), le manchon annulaire élastique (20̸, 21) soit relié, en particulier soudé, au tube (1 ou 3) contre lequel il s'appuie.

2. Conduit selon la revendication 1,
caractérisé par le fait que, par l'une de ses extrémités annulaires axiales (23, 24) ou par au moins une barrette de pontage (25, 30̸), le manchon annulaire élastique (20̸, 21) est relié, par une liaison de soudage par points, au tube (1 ou 3) contre lequel il s'appuie.

3. Conduit selon la revendication 1,
caractérisé par le fait que le manchon annulaire élastique (20̸, 21) est relié à un tube (1 ou 3) par un cordon de soudure en forme d'anneau au moins partiel, à l'une de ses extrémités annulaires axiales (23, 24), dans sa zone d'appui contre ce tuyau.

4. Conduit selon une ou plusieurs des revendications précédentes,
caractérisé
par le fait qu'au moins une barrette de pontage (25) a en coupe à peu près la forme d'un segment circulaire dont le rayon de courbure (45) est inférieur au demi-diamètre intérieur, à savoir le rayon de courbure du tube-enveloppe (3) et que la barrette de pontage (25) s'appuie contre le tube-enveloppe (3) par la face convexe de sa forme en coupe.

5. Conduit selon l'une des revendications 1 à 4,
caractérisé
par le fait que les extrémités annulaires axiales (23, 24), du manchon annulaire élastique (20̸, 21) situées à l'extérieur des barrettes de pontage (25) ne sont pas fendues et sont fermées en soi sur la périphérie.

6. Conduit selon l'une des revendications 1 à 4,
caractérisé
par le fait que les extrémité annulaires (23, 24; 28, 29) du manchon annulaire élastique (20̸, 21) sont fendues dans le prolongement d'une fente (46).

7. Conduit selon une ou plusieurs des revendications précédentes,
caractérisé
par une forme en coupe des faces d'appui (35, 36) des extrémités annulaires (23, 24; 28, 29) du manchon annulaire élastique (20̸, 21) qui présente un bombement convexe en direction de la paroi adjacente d'un tube (1 ou 3).

8. Conduit selon une ou plusieurs des revendications précédentes,
caractérisé
par le fait que l'assise de coulissement est disposée à son extrémité (6) située du côté du catalyseur et qu'à cet endroit le carter (7) du catalyseur est soudé à la périphérie extérieure de son tube-eneveloppe (3).

9. Conduit selon une ou plusieurs des revendications précédentes,
caractérisé
par le fait que le tube intérieur (1) est fixé au tube-enveloppe (3) entre les deux extrémités (4, 6) du conduit et qu'aux deux extrémités, il est guidé contre le tube-enveloppe (3) par une assise de coulissement.
